# DEMANDE DE BREVET EUROPEEN

(11) **EP 2 236 730 A2**
(43) Date de publication de la demande: **06.10.2010**
(21) Numéro de dépôt: 10158575.0
(22) Date de dépôt: 31.03.2010
(51) Int. Cl.: E06B 9/40, B64C 1/14

(54) **Ensemble de store notamment pour hublot d'aéronef, comprenant des moyens de maintien en tension**

(30) Priorité: 31.03.2009 FR 0901571; 15.10.2009 FR 0957241
(71) Demandeur: Vision Systems Aeronautics, 69530 Brignais (FR)
(72) Inventeur: Figura, Georges, 69530, Brignais (FR)
(74) Mandataire: Maureau, Philippe

(57) **Abrégé**

Cet ensemble de store notamment pour hublot d'aéronef comprend au moins un écran (17) apte à régler la luminosité traversant ledit hublot et au moins une bobine (15) sur laquelle ledit écran (17) est apte à s'enrouler.

Cet ensemble est remarquable en ce qu'il comprend des moyens (25, 27, 29, 30) de maintien en tension du bord libre dudit écran pendant les phases d'enroulement et de déroulement de cet écran.

## Description

La présente invention se rapporte à un ensemble de store notamment pour hublot d'aéronef.

La possibilité de réglage de l'intensité lumineuse qui traverse un hublot de passager d'aéronef est une question essentielle tant pour des raisons de confort que de sécurité.

Il est en particulier indispensable de pouvoir offrir la possibilité aux passagers de réduire, voire d'occulter complètement la lumière filtrant à travers leurs hublots.

On connaît de la technique antérieure différents systèmes de stores permettant de réaliser cette réduction, voire cette occultation de l'intensité lumineuse traversante.

Dans ces systèmes de la technique antérieure, un problème fréquemment rencontré réside dans le coincement du store lorsqu'on cherche à le déployer ou à l'enrouler.

La présente demande de brevet a notamment pour but de fournir un ensemble de store qui permette de supprimer ce risque.

On atteint ce but de l'invention avec un ensemble de store notamment pour hublot d'aéronef, comprenant au moins un écran apte à régler la luminosité traversant ledit hublot et au moins un tube d'enroulement sur lequel ledit écran est apte à s'enrouler, cet ensemble étant remarquable en ce qu'il comprend des moyens de maintien en tension du bord libre dudit écran pendant les phases d'enroulement et de déroulement de cet écran.

Suivant d'autres caractéristiques optionnelles de cet ensemble de store :
- lesdits moyens de maintien en tension comprennent d'une part des moyens de rappel élastique dudit tube en enroulement, et d'autre part des moyens de traction dudit écran en déroulement ;
- lesdits moyens de traction dudit écran en déroulement comprennent une barre de charge solidaire du bord libre dudit écran, une barre rotative couplée à un moteur, un câble passant librement à l'intérieur de ladite barre de charge, et dont les deux extrémités sont aptes à s'enrouler respectivement aux extrémités de ladite barre rotative sous l'action dudit moteur ;
- ledit ensemble comprend des moyens de détection de la position dudit écran : ces moyens de détection permettent de stopper le moteur en fin de course de fermeture de l'écran, voire dans toute autre position intermédiaire souhaitée ; ces moyens de détection permettent en outre de détecter tout fonctionnement anormal dans le mouvement des écrans ;
- ledit ensemble comprend au moins un premier écran adapté pour réaliser un premier réglage de la luminosité, et un second écran adapté pour réaliser un deuxième réglage de la luminosité : de cette manière, en choisissant des matériaux appropriés pour chacun des écrans, on peut obtenir une très large gamme de combinaisons de filtrage ou d'arrêt de la lumière, et ainsi obtenir exactement la luminosité souhaitée à l'intérieur de l'aéronef en fonction de la luminosité extérieure.
- ledit premier écran est formé dans un matériau occultant, et ledit second écran est formé dans un matériau filtrant : cette combinaison particulière de matériaux permet d'obtenir, pour un même hublot, les fonctions d'occultation et de filtration de la lumière : ceci permet d'obtenir le maximum de réglages possibles vis-à-vis de la réduction/de l'occultation de l'intensité lumineuse traversant le hublot ;
- ledit ensemble de store comprend au moins trois parois transparentes définissant deux cavités dans lesquelles lesdits premier et deuxième écrans sont aptes à se déployer : ces parois transparentes, tout en assurant leur fonction de barrière transparente entre l'extérieur et l'intérieur de l'aéronef, remplissent une fonction de guidage du déploiement des écrans ;
- ledit ensemble comprend des premier et deuxième tubes d'enroulement sur lesquelles lesdits premier et deuxième écrans sont respectivement aptes à s'enrouler, ces deux tubes étant sensiblement superposés selon la direction de déploiement desdits écrans : cet agencement particulier permet de limiter l'épaisseur du hublot ;
- ledit moteur est agencé pour entrainer ledit tube d'enroulement à l'aide de moyens d'entrainement ;
- lesdits moyens d'entrainement comportent un système de débrayage ;
- ledit système de débrayage comporte une première pièce solidaire en rotation de la barre rotative comprenant une partie présentant une forme complémentaire à une partie d'une seconde pièce montée libre en rotation sur la barre rotative ;
- ladite première pièce est une cloche et la seconde pièce est une noix d'embrayage ;
- ledit système de débrayage comporte une commande d'actionnement manuel.

D'autres caractéristiques et avantages de la présente invention apparaîtront à la lumière de la description qui va suivre, et à l'examen des dessins ci-annexés, dans lesquels :
- la figure 1 représente une vue de face d'une structure de hublot pour aéronef incorporant un premier mode de réalisation d'un ensemble de store selon l'invention, comprenant deux écrans dont l'un est représenté en position mi-close,
- la figure 2 est une vue en perspective de la zone II indiquée sur la figure 1,
- la figure 3 est une vue en perspective de la zone III indiquée sur la figure 1,

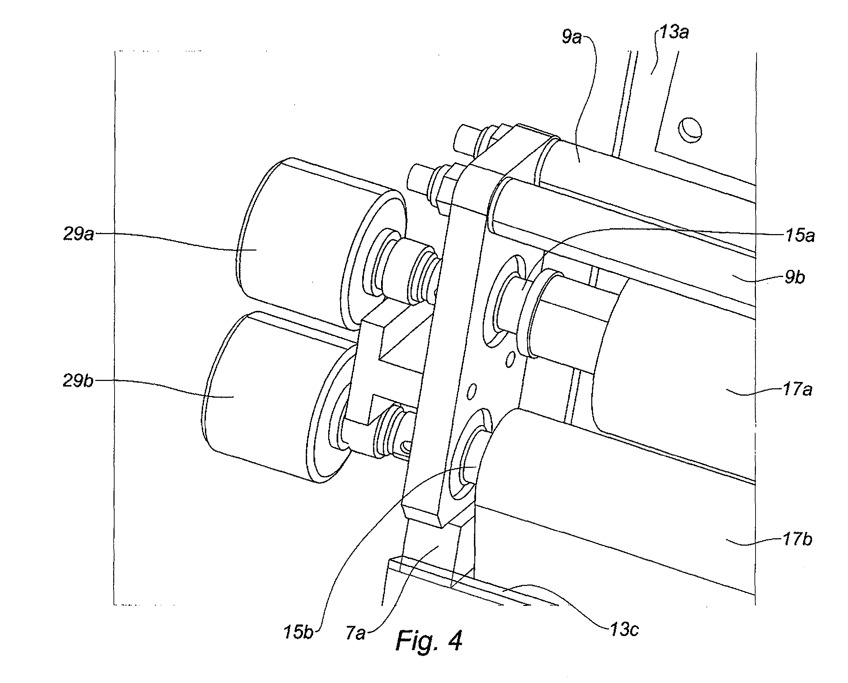

- la figure 4 est une vue en perspective de la zone IV indiquée sur la figure 1,
- la figure 5 est une vue en perspective de la partie supérieure d'un deuxième mode de réalisation d'un ensemble de store selon l'invention, comprenant un seul écran, représenté en position mi-close,
- la figure 6 est une vue de face de l'ensemble de store de la figure 5, les montant de cet ensemble ayant été ôtés dans un but explicatif,
- la figure 7 est une vue en perspective de la zone VII de la figure 6,
- la figure 8 est une autre vue en perspective de la zone VII de la figure 7, une pièce ayant été ôtée dans un but explicatif

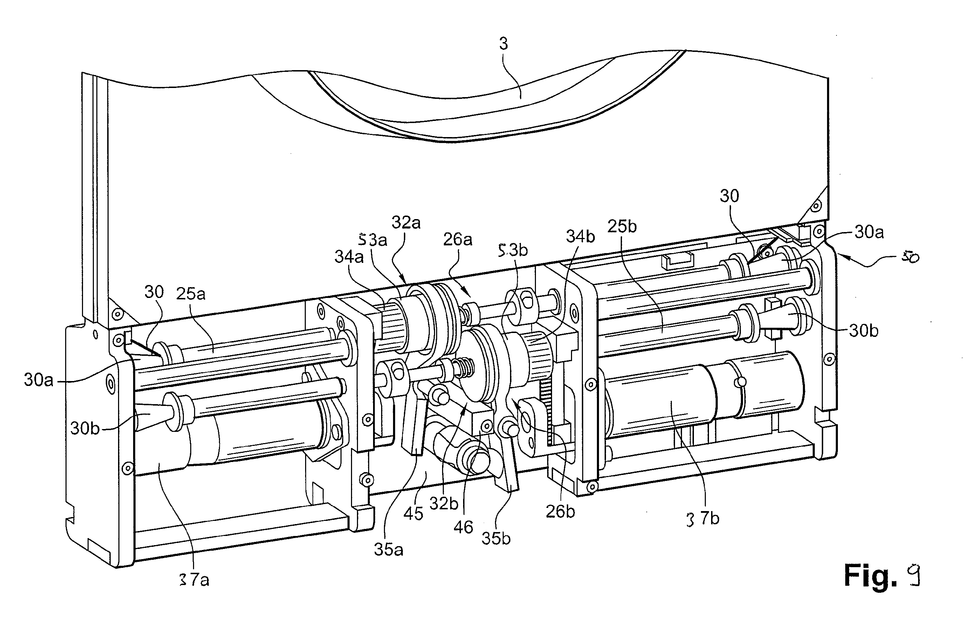

- la figure 9 est une vue en perspective de l'intérieur d'un bloc de motorisation d'un ensemble de store selon un autre mode de réalisation de l'invention comportant deux écrans, les caches de cet ensemble ayant été ôtés dans un but explicatif,
- la figure 10 est une vue de face des systèmes de débrayage du bloc de motorisation illustré à la figure 9,

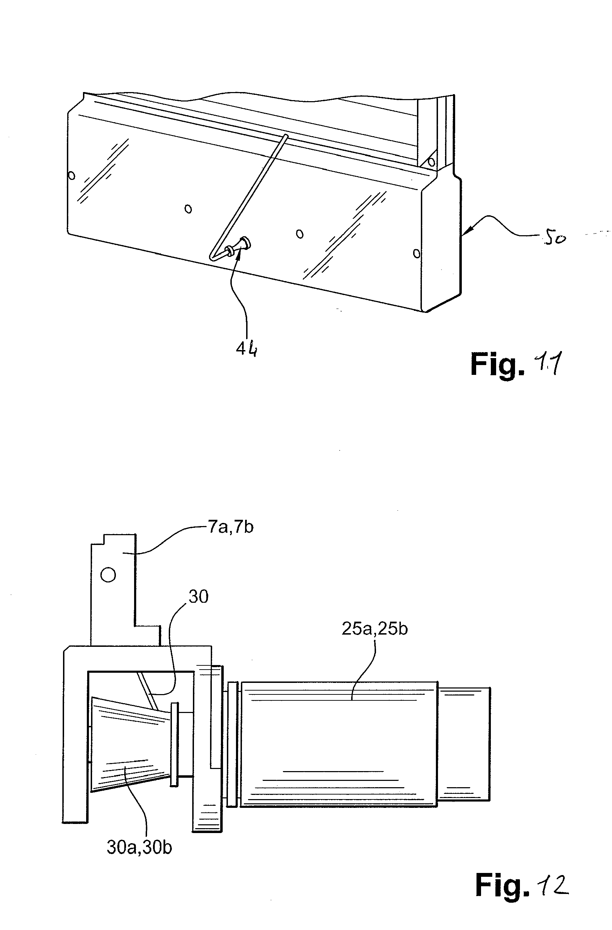

- la figure 11 est une vue en perspective de l'extérieur du bloc de motorisation d'un ensemble de store selon le mode de réalisation présenté aux figures 9 et 10.
- la figure 12 est une vue de face sur l'extrémité d'une barre rotative avec un câble en position déroulée selon le mode de réalisation présenté aux figures 9 à 11.

Sur l'ensemble de ces figures, des références identiques ou analogues désignent des organes ou ensembles d'organes identiques ou analogues.

On utilisera les termes « supérieur » et « inférieur » dans la description qui va suivre : ces termes doivent s'entendre respectivement par rapport à la direction d'enroulement/déroulement des écrans : en position enroulée, le bord libre de l'écran est situé vers la partie « supérieure » de l'ensemble, et en position déroulée, ce bord libre est situé vers la partie « inférieure » de l'ensemble.

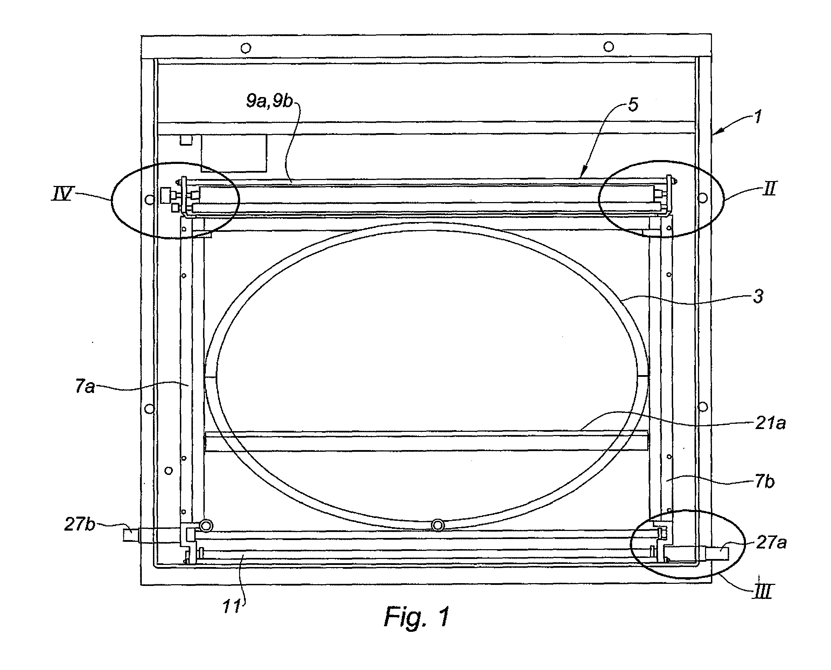

En se reportant à la figure 1, on peut voir une structure de hublot 1 , comportant une ouverture sensiblement elliptique 3 définissant un hublot : la structure 1 est destinée à être installée sur la structure générale d'un aéronef (non représentée).

A l'intérieur de la structure 1, est monté un ensemble de store 5 conforme à un premier mode de réalisation de l'invention : il s'agit d'un ensemble à deux écrans.

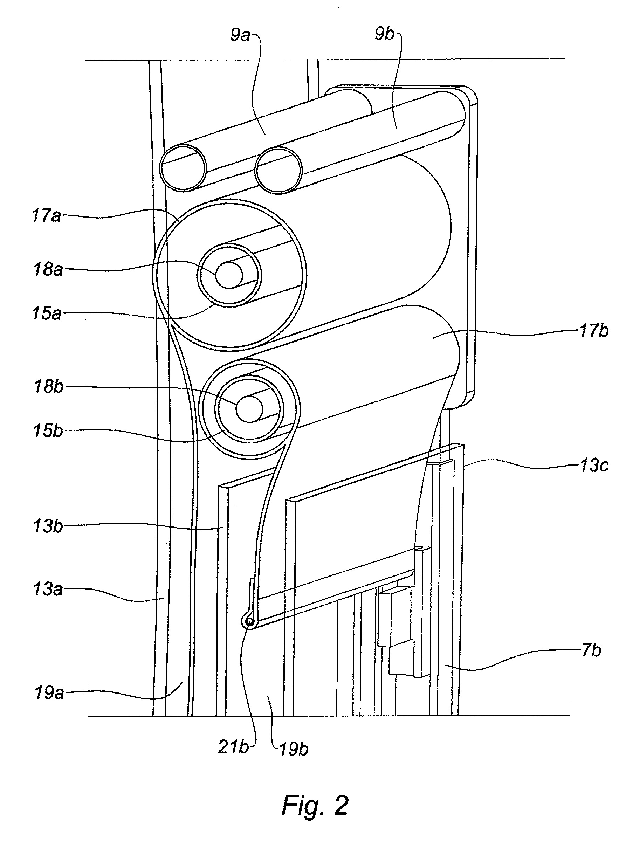

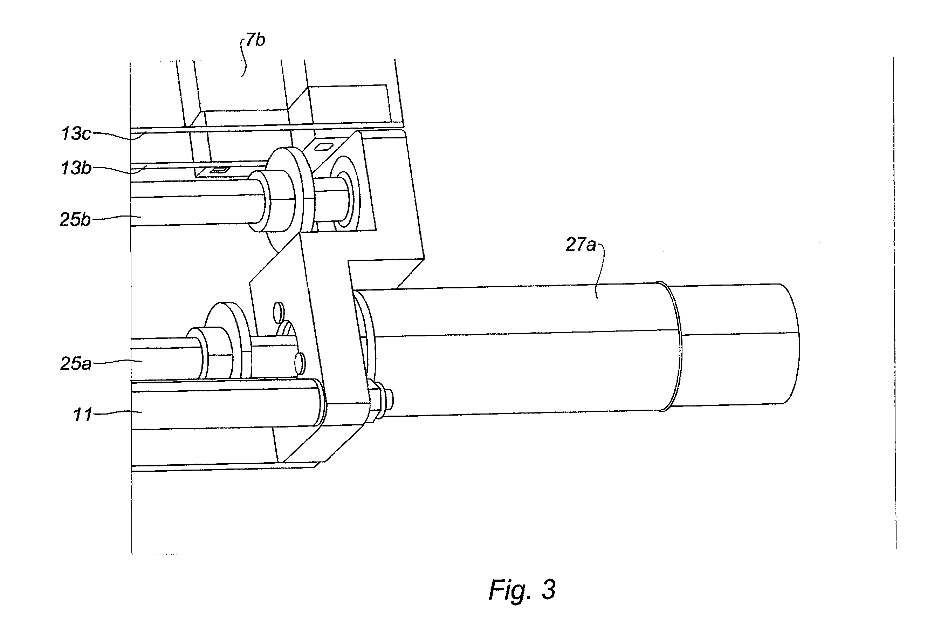

Cet ensemble 5 comporte deux montants latéraux 7a, 7b, deux traverses supérieures 9a, 9b (voir notamment figure 2) et une traverse inférieure 11 (voir notamment figure 3).

Comme cela est particulièrement visible sur la figure 2, trois parois transparentes 13a, 13b, 13c sont fixées sur les montants 7a, 7b de manière à définir une zone de transparence pour le hublot 3 : ces trois parois peuvent être réalisées par exemple en plexiglas.

Sous les deux traverses supérieures 9a, 9b sont disposés les premier et deuxième tubes d'enroulement 15a, 15b, montés rotatifs par rapport aux montants 7a, 7b.

Sur ces tubes sont enroulés respectivement des premier et deuxième tissus formant écrans 17a, 17b.

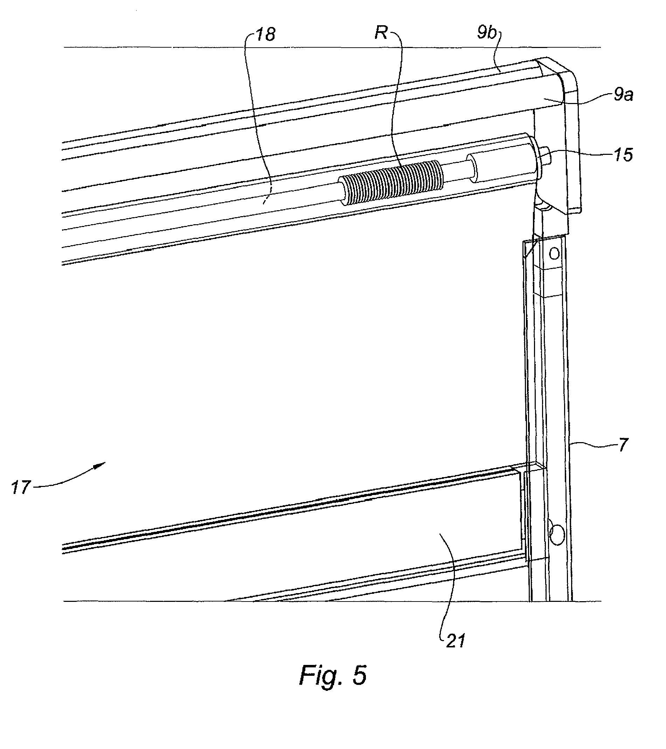

Des ressorts R de type spirale (voir figure 5), dont une extrémité est fixée à l'intérieur de chaque tube d'enroulement 15a, 15b, et dont l'autre extrémité est fixée sur une barre fixe 18a, 18b (voir figure 2) s'étendant à l'intérieur de chaque tube, exercent des couples de rappel élastique tendant à faire pivoter les deux tubes 15a, 15b dans des sens respectifs permettant d'enrouler les deux écrans 17a, 17b.

Dans l'exemple représenté, le tissu formant le premier écran 17a est de préférence occultant, c'est-à-dire totalement opaque vis-à-vis de la transmission de la lumière, et le tissu formant le deuxième écran 17b est de préférence filtrant, c'est-à-dire apte à laisser passer une partie seulement de la lumière, et à permettre éventuellement une vision à travers celui-ci.

Dans ce mode de réalisation particulier, l'écran occultant 17a est de préférence disposé de manière à pouvoir se déployer face à l'extérieur de l'aéronef, et l'écran filtrant 17b est disposé de manière à pouvoir se déployer face à l'intérieur de l'aéronef.

Dans ce cas, la paroi transparente 13a s'étend au-delà du volume défini par l'ensemble de store selon l'invention, comme cela est visible sur la figure 2, alors que les deux autres parois transparentes 13b et 13c s'étendent uniquement jusqu'à proximité du tube d'enroulement 15b de l'écran filtrant 17b.

Comme on peut le voir sur la figure 2, les tubes d'enroulement 15a, 15b sont de préférence sensiblement superposés, c'est-à-dire situés tous deux dans un plan sensiblement parallèle à la direction de déploiement des écrans occultant et filtrant 17a et 17b, laquelle direction est aussi celle des parois vitrées 13a, 13b, 13c.

Comme on l'aura compris en effet à l'examen de la figure 2, ces trois parois transparentes définissent deux cavités 19a, 19b dans lesquelles sont susceptibles de se déployer respectivement les écrans 17a et 17b.

Comme cela est visible sur la figure 1 où l'on voit l'écran occultant 17a partiellement déployé, et sur la figure 2 où l'on voit l'écran filtrant 17b enroulé sur son tube d'enroulement 15b, les bords libres de ces écrans comprennent chacun une barre de charge creuse 21 a, 21 b.

Comme cela sera explicité plus loin lors de l'exposé d'un deuxième mode de réalisation (à écran unique) de l'ensemble selon l'invention, des câbles passent à l'intérieur de ces barres de charge 21 a, 21 b et les extrémités libres de chacun de ces deux câbles sont montées respectivement sur deux barres rotatives 25a, 25b montées sur la partie inférieure des montants 7a, 7b.

Comme cela est visible notamment sur les figures 1 et 3, des moteurs électriques 27a, 27b sont couplés respectivement à ces barres rotatives 25a, 25b.

De préférence, et comme cela est particulièrement visible sur la figure 3, les deux barres rotatives 25a, 25b sont superposées, c'est-à-dire situées dans un plan sensiblement parallèle à la direction de déploiement des deux écrans 17a, 17b, comme indiqué précédemment au sujet des deux tubes d'enroulement 15a, 15b.

L'ensemble d'écran selon l'invention peut également comprendre des moyens de détection des positions respectives des écrans 17a, 17b, tels que des capteurs électriques ou optiques 29a, 29b, ainsi qu'une électronique associée de commande des moteurs 27a, 27b, permettant de faire fonctionner ou d'arrêter ces moteurs de manière à atteindre n'importe quelle position d'ouverture et de fermeture totale ou partielle pour les deux écrans 17a, 17b.

Le mode de fonctionnement et les avantages de l'ensemble de store qui vient d'être décrit résultent directement de ce qui précède.

L'écran occultant 17a permet d'empêcher tout passage de lumière provenant de l'extérieur de l'aéronef.

L'écran filtrant 17b permet de ne laisser passer qu'une partie de la lumière provenant de l'extérieur de l'aéronef, et permet inversement une certaine visibilité de l'intérieur vers l'extérieur de l'aéronef.

Selon que l'on souhaite occulter et/ou filtrer la lumière provenant de l'extérieur de l'aéronef, on agit sélectivement sur les écrans occultant et filtrant 17a, 17b en les déroulant de ou en les enroulant sur les tubes d'enroulement respectifs 15a, 15b.

Le déroulement des écrans 17a, 17b s'effectue au moyen des moteurs électriques respectifs 27a, 27b, qui entraînent en rotation les barres rotatives respectives 25a, 25b, lesquelles enroulent les câbles associés, permettant d'exercer des efforts de traction sur les barres de garde respectives 21 a, 21 b.

On notera que du fait que ces câbles s'étendent librement à l'intérieur des barres de garde 21 a, 21 b, c'est-à-dire de manière à pouvoir coulisser à l'intérieur de celles-ci, on prévient toute mise en travers de ces barres risquant de conduire au blocage de l'écran associé.

Le cas échéant, les moyens de détection mentionnés plus haut permettent d'amener chaque écran 17a, 17b à une position intermédiaire présélectionnée.

On notera que les parois transparentes 13a, 13b, 13c et leurs cavités associées 19a, 19b permettent de réaliser le guidage des écrans 17a, 17b, lors des opérations d'enroulement et déroulement.

Lorsque l'on souhaite enrouler les écrans 17a et/ou 17b de manière à dégager la vision à travers le hublot 3, on fait tourner le moteur électrique 27a et/ou 27b en sens inverse, de manière à dérouler le câble 30 et à permettre ainsi aux ressorts spirales R susmentionnés de faire tourner le tube d'enroulement associé 15a et/ou 15b dans le sens permettant l'enroulement de l'écran 17a et/ou 17b concerné.

On notera également que l'agencement superposé des tubes d'enroulement 15a, 15b ainsi que des barres rotatives 25a, 25b permet de diminuer l'encombrement en épaisseur de l'ensemble de store 5 selon l'invention : en pratique, on peut atteindre une épaisseur inférieure à 3 cm, ce qui est particulièrement avantageux pour faciliter l'intégration de cet ensemble à l'intérieur d'une structure de hublot 1.

Comme on peut le comprendre à la lumière de la description qui précède, l'ensemble de store selon le premier mode de réalisation de l'invention permet, de part la présence de deux écrans de caractéristiques différentes, une grande gamme de réglages vis-à-vis de la luminosité extérieure.

Les moyens d'entraînement électriques de ces écrans permettent d'obtenir ces réglages avec le minimum d'intervention humaine.

Le système particulier à câble et à ressort permet un enroulement impeccable des écrans, sans risque de coincement.

Selon un deuxième mode de réalisation visible sur les figures 5 à 8, on peut envisager un ensemble selon l'invention à écran unique 17.

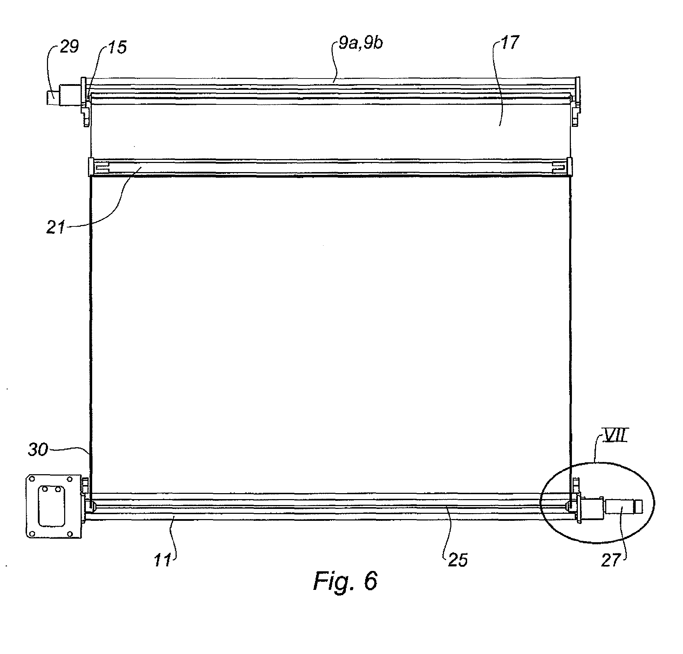

Sur la figure 6, on peut voir le câble 30 de traction de l'écran 17, qui passe librement à l'intérieur de la barre de charge 21, et qui s'enroule autour de la barre rotative 25.

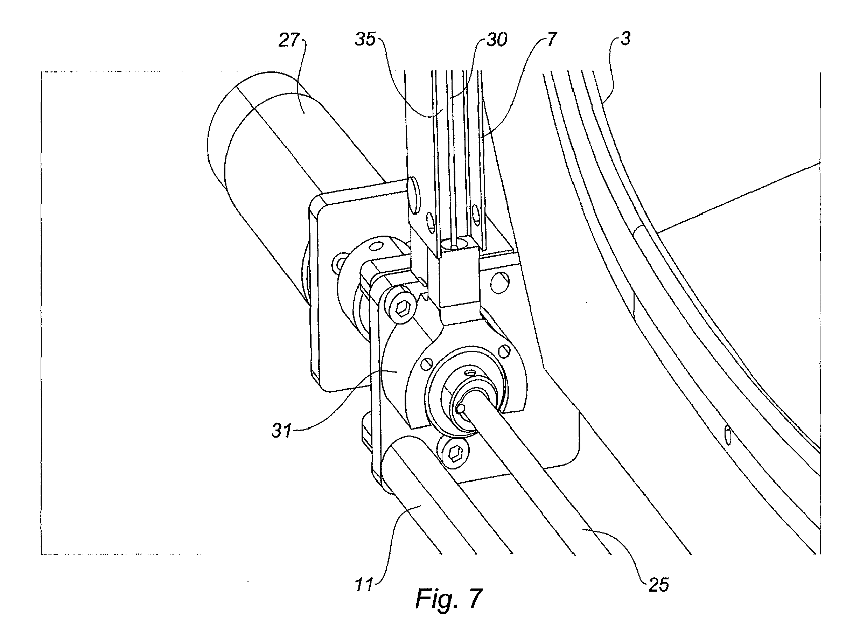

Plus précisément, comme on peut le voir sur la figure 7, à chaque extrémité de la barre 25, ce câble 30 pénètre à l'intérieur d'un étrier de guidage 31, qui chevauche une bobine 33 solidaire de la barre 25.

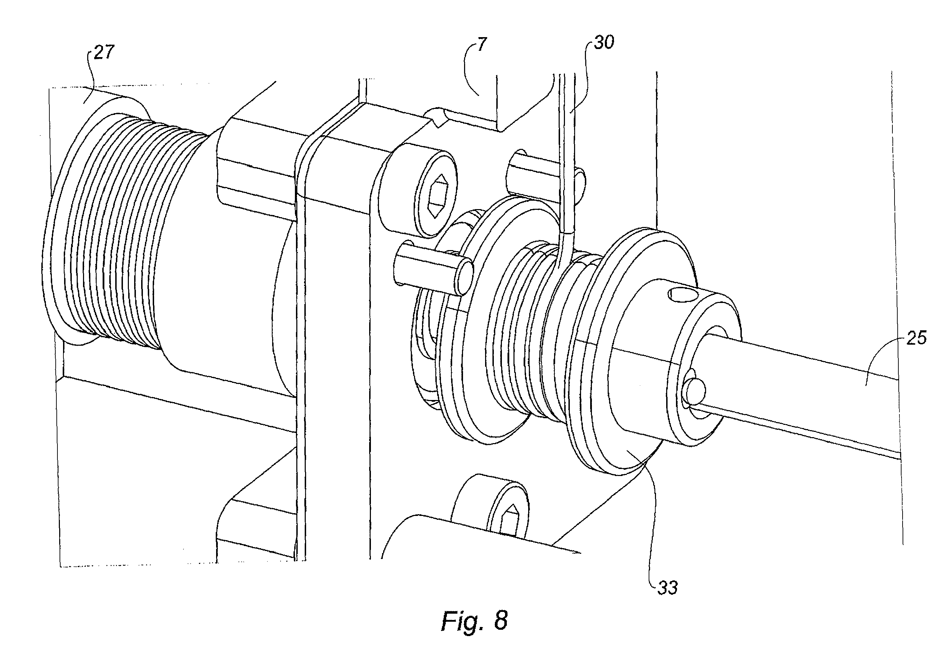

Cette bobine 33 est particulièrement visible sur la figure 8, où l'étrier 31 a été ôté à des fins explicatives.

On remarquera également, sur la figure 7, que le câble 30 circule à l'intérieur d'une gorge 35 définie par chaque montant 7.

Selon un autre mode de réalisation, les moyens d'entrainement des barres rotatives 25a, 25b par les moteurs électriques 37a, 37b comprennent des systèmes de débrayage 32a, 32b.

Ces systèmes de débrayage 32a, 32b comportent chacun une cloche 53a, 53b solidaire en rotation de l'une des barres rotatives 25a, 25b, et une noix 34a, 34b, montée libre en rotation sur ces mêmes barres rotatives 25a, 25b.

Ces systèmes de débrayage 32a, 32b comprennent également chacun une fourchette d'actionnement 55a, 55b et une butée de débrayage 36a, 36b.

Le travail des moteurs électriques 37a, 37b est transmis à l'aide d'une courroie crantée 47a, 47b reliant un pignon 38a, 38b de sortie de moteur 37a, 37b à un pignon 49a, 49b monté libre en rotation sur les barres rotatives 25a, 25b. A cet effet, le pignon 49a, 49b et la noix 34a, 34b sont donc montés sur des roulements (non illustrés) eux-mêmes montés sur les barres rotatives 25a, 25b. Ce pignon 49a, 49b est de plus solidaire en rotation de la noix 34a, 34b.

La cloche 53a, 53b est quant à elle solidaire en rotation des barres rotatives 25a, 25b, mais est montée sur des cannelures (non illustrées) disposées axialement sur la surface des barres rotatives 25a, 25b lui permettant ainsi de bénéficier d'un dégagement latéral le long des barres rotatives 25a, 25b.

Ce dégagement latéral est suffisant pour permettre un engagement et un désengagement de la cloche 53a, 53b sur la noix 34a, 34b.

La cloche 53a, 53b est solidaire en rotation et en translation d'une butée de débrayage 36a, 36b.

Un ressort de rappel 40a, 40b prenant appui sur une bague 41 a, 41 b fixée sur les barres rotatives 25a, 25b pousse axialement la butée de débrayage 36a, 36b qui entraine à son tour la cloche 53a, 53b sur la noix 34a, 34b.

L'embrayage de la cloche 53a, 53b sur la noix 34a, 34b réalise la transmission du travail du moteur 37a, 37b aux barres rotatives 25a, 25b de par la complémentarité des formes existante entre ces deux pièces.

Les fourchettes d'actionnement 55a, 55b comprennent une extrémité haute en forme d'anneau disposée autour des barres rotatives 25a, 25b et une extrémité basse formant levier. Ces fourchettes d'actionnement 55a, 55b sont montées sur des axes 42a, 42b de rotation sensiblement transversaux aux axes de rotation des barres rotatives 25a, 25b et possèdent chacune sur leur extrémités hautes deux ergots 43a, 43b faisant saillie en direction des ressorts de rappel 40a, 40b et sensiblement disposés à la même hauteur que les axes de rotation des barres rotatives 25a, 25b.

Une commande d'actionnement manuel 44 est montée en rotation sur le capot central 45 du bloc de motorisation 50. Cette commande d'actionnement 44 traverse transversalement ce capot central 45 et comprend sur sa partie débouchant à l'intérieur du bloc de motorisation 50, deux cames disposées face aux extrémités basses des fourchettes d'actionnement 55a, 55b.

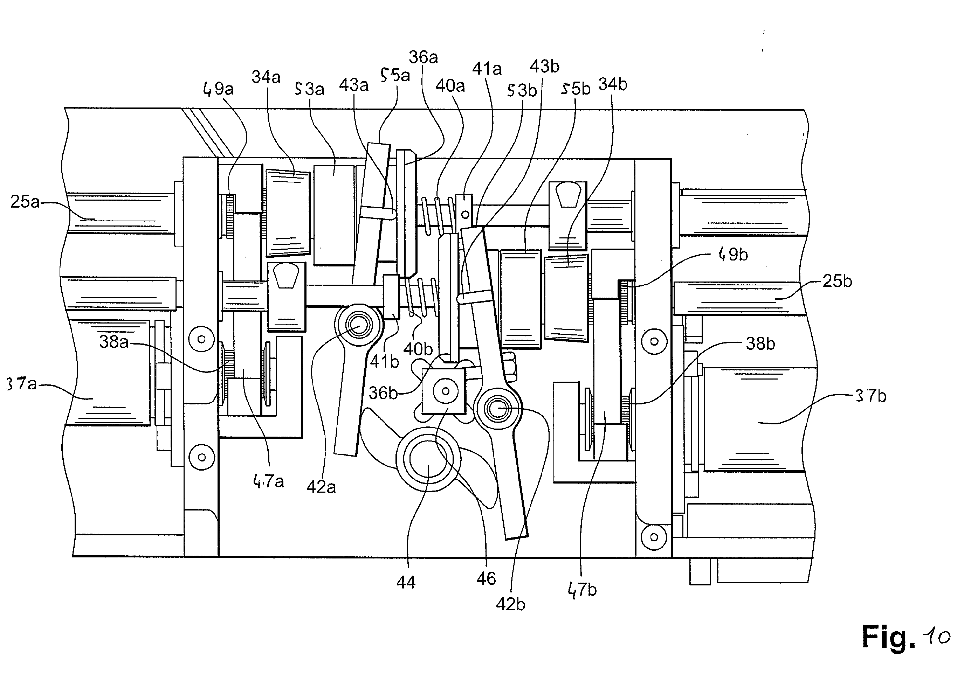

Comme illustrée à la figure 10, cette commande d'actionnement manuel 44 est actionnée depuis l'extérieur du bloc de motorisation 50 à l'aide d'une clé, par exemple du type BTR. La rotation de cette clé entraine en rotation la commande d'actionnement manuel 44.

Pour déterminer le sens de rotation correct, une entretoise 46 sépare les deux capots centraux du bloc de motorisation 50 et sert de butée dans un sens de rotation de la commande d'actionnement manuel 44.

La rotation dans le sens antihoraire de la commande d'actionnement manuel 44 met en contact les cames avec les extrémités basses des fourchettes d'actionnement 55a, 55b. Le contact glissant des cames sur les extrémités basses des fourchettes d'actionnement 55a, 55b entraine alors un pivotement des fourchettes d'actionnement 55a, 55b selon leur axe de rotation 42a, 42b et entrainent à leur tour la partie haute des fourchettes d'actionnement 55a, 55b et leur ergots 43a, 43b à l'encontre des butées de débrayage 36a, 36b.

Un contact glissant de ces ergots 43a, 43b sur les butées de débrayage 36a, 36b entraine celles-ci à l'encontre de l'action des ressorts de rappel 40a, 40b et débraye les cloches 53a, 53b des noix 34a, 34b.

Les barres rotatives 25a, 25b se trouvent alors soumises à la seule action des ressorts spirales R disposés à l'intérieur des tubes d'enroulement 15a, 15b. L'actionnement de la commande d'actionnement manuel 44 entraine donc l'enroulement des écrans 17a, 17b.

Bien entendu, la présente invention n'est pas limitée aux modes de réalisation décrits et représentés.

C'est ainsi par exemple que l'on pourrait envisager qu'au lieu d'être sensiblement planes, certaines au moins des parois transparentes 13a, 13b, 13c soient au moins ou en partie galbées.

C'est ainsi également que l'on pourrait envisager que les tubes d'enroulement 15a, 15b et/ou les barres rotatives 25a, 25b ne soient pas disposés de manière superposée, mais éventuellement côte-à-côte, ou dans toute autre position relative.

C'est ainsi également que l'on pourrait envisager que ces tubes d'enroulement est ces barres rotatives (et les capteurs et moteurs associés) soient disposés dans le sens opposé de celui qui a été explicité ci-avant, c'est-à-dire respectivement dans les parties inférieure et supérieure de l'ensemble de store ; ces tubes et ces barres pourraient aussi être placés sur les côtés de cet ensemble.

C'est ainsi également que l'on pourrait envisager un pilotage centralisé et/ou synchronisé et/ou avec télécommande d'une partie ou de la totalité des ensembles de stores conformes à l'invention, installés à bord d'un aéronef.

C'est ainsi encore que l'on pourrait remplacer le système à deux bobines 33 décrit ci-dessus par un système à une seule bobine pour chaque écran, le câble 30 étant alors fixé sur l'un des montants 7 à l'une de ses extrémités et sur la bobine 33 à son autre extrémité, et apte à courir à l'intérieur de la barre de charge 21 (éventuellement avec des moyens de limitation des frottements tels que des roulettes placées dans la barre de charge) lors des mouvements de déroulement/enroulement de l'écran.

La présente invention peut s'appliquer à toute surface transparente d'aéronef, et en particulier au hublot de passager.

## Revendications

1. Ensemble (5) de store notamment pour hublot (3) d'aéronef, comprenant :
- au moins un écran (17a, 17b) apte à régler la luminosité traversant ledit hublot (3),
- au moins un tube d'enroulement (15a, 15b) sur lequel ledit écran est apte à s'enrouler,
- des moyens de maintien en tension du bord libre dudit écran pendant les phases d'enroulement et de déroulement de cet écran, ces moyens de tension comprenant d'une part des moyens de rappel élastique (29a, 29b) dudit tube (15a, 15b) en enroulement, et d'autre part des moyens de traction (21 a, 21 b, 30) dudit écran en déroulement,
cet ensemble étant **caractérisé en ce que** lesdits moyens de traction dudit écran en déroulement comprennent une barre de charge (21 a, 21 b) solidaire du bord libre dudit écran (17a, 17b), une barre rotative (25a, 25b) couplée à un moteur (27a, 27b), et un câble (30) passant librement à l'intérieur de ladite barre de charge, dont au moins l'une des deux extrémités est apte à s'enrouler autour d'une extrémité (33) de ladite barre rotative (25a, 25b) sous l'action dudit moteur.

2. Ensemble (5) selon la revendication 1, **caractérisé en ce que** les deux extrémités dudit câble (30) sont aptes à s'enrouler respectivement aux extrémités (33) de ladite barre rotative (25a, 25b) sous l'action dudit moteur (27a, 27b).

3. Ensemble (5) selon l'une des revendications 1 ou 2, **caractérisé en ce qu'**il comprend des moyens (29a, 29b) de détection de la position dudit écran (17a, 17b).

4. Ensemble (5) selon l'une quelconque des revendications précédentes, **caractérisé en ce qu'**il comprend au moins un premier écran (17a) adapté pour réaliser un premier réglage de la luminosité, et un second écran (17b) adapté pour réaliser un deuxième réglage de la luminosité.

5. Ensemble (5) selon la revendication 6, **caractérisé en ce que** ledit premier écran (17a) est formé dans un matériau occultant, et **en ce que** ledit second écran (17b) est formé dans un matériau filtrant.

6. Ensemble (5) selon l'une des revendications 4 ou 5, **caractérisé en en ce qu**'il comprend au moins trois parois transparentes (13a, 13b, 13c) définissant deux cavités (19a, 19b) dans lesquelles lesdits premier (17a) et deuxième (17b) écrans sont aptes à se déployer.

7. Ensemble (5) selon l'une quelconque des revendications 4 à 6, **caractérisé en ce qu'**il comprend des premier (15a) et deuxième (15b) tubes d'enroulement sur lesquels lesdits premier (17a) et deuxième (17b) écrans sont respectivement aptes à s'enrouler, ces deux tubes étant sensiblement superposés selon la direction de déploiement desdits écrans.

8. Ensemble (5) selon l'une quelconque des revendications précédentes, **caractérisé en ce que** le moteur (27a, 27b) est agencé pour entrainer ledit tube d'enroulement (15a, 15b) à l'aide de moyens d'entrainement (26a, 26b).

9. Ensemble (5) selon la revendication 8, **caractérisé en ce que** les moyens d'entrainement (26a, 26b) comportent un système de débrayage (32a, 32b).

10. Ensemble (5) selon la revendication 9, **caractérisé en ce que** le système de débrayage (32a, 32b) comporte une première pièce solidaire en rotation de la barre rotative (25a, 25b) comprenant une partie présentant une forme complémentaire à une partie d'une seconde pièce montée libre en rotation sur la barre rotative (25a, 25b).

11. Ensemble (5) selon la revendication 10, **caractérisé en ce que** la première pièce est une cloche (33a, 33b) et la seconde pièce est une noix (34a, 34b) d'embrayage.

12. Ensemble (5) selon l'une des revendications 9 à 11, **caractérisé en ce que** le système de débrayage (32a, 32b) comporte une commande d'actionnement manuel (44).
